# EUROPÄISCHE PATENTSCHRIFT

(11) **EP 3 172 461 B1**
(45) Veröffentlichungstag und Bekanntmachung des Hinweises auf die Patenterteilung: **13.03.2019**
(21) Anmeldenummer: 15756343.8
(22) Anmeldetag: 22.07.2015
(51) Int. Cl.: F16F 15/14

(54) **DREHMOMENTÜBERTRAGUNGSEINRICHTUNG SOWIE GETRIEBE**
TORQUE-TRANSMITTING DEVICE AND TRANSMISSION
DISPOSITIF DE TRANSMISSION DE COUPLE ET BOÎTE DE VITESSES

(30) Priorität: 24.07.2014 DE 102014214519; 06.11.2014 DE 102014222712
(43) Veröffentlichungstag der Anmeldung: 31.05.2017
(73) Patentinhaber: Schaeffler Technologies AG & Co. KG, 91074 Herzogenaurach (DE)
(72) Erfinder: ISCHE, Lutz, 77815 Bühl (DE)
(86) Internationale Anmeldenummer: PCT/DE2015/200412
(87) Internationale Veröffentlichungsnummer: WO 2016/012022

(56) Entgegenhaltungen:
- EP-A1- 2 853 772
- DE-A1-102010 049 930
- US-A1- 2014 113 733

## Beschreibung

Die vorliegende Erfindung betrifft eine Drehmomentübertragungseinrichtung, insbesondere eine nass laufbare Anfahr-/Fahreinrichtung, für ein Kraftfahrzeug mit einem Verbrennungsmotor, insbesondere für einen Antriebsstrang eines Personenkraftwagens. Ferner betrifft die Erfindung ein Getriebe, bevorzugt ein Automatikgetriebe oder ein stufenloses Getriebe, für ein Fahrzeug, insbesondere für einen Antriebsstrang eines Personenkraftwagens.

Hydrodynamische Drehmomentwandler werden seit Jahrzehnten insbesondere für Stufenautomatikgetriebe oder stufenlose Getriebe, sogenannte CVT-Getriebe (CVT: Continuously Variable Transmission) für Fahrzeuge eingesetzt. Der Drehmomentwandler ist zwischen einem Verbrennungsmotor und dem Getriebe des Fahrzeugs angeordnet und überträgt ein Drehmoment des Verbrennungsmotors auf eine Eingangswelle des Getriebes. Die Übertragung des Drehmoments erfolgt bei einer Anfahrt des Fahrzeugs zunächst hydrodynamisch und zur Verbrauchsabsenkung des Verbrennungsmotors in einem Fahrbetrieb über eine Kupplungseinrichtung für den Drehmomentwandler, die meist als eine Überbrückungskupplung bezeichnet ist. Der Drehmomentwandler erhöht bei der Anfahrt des Fahrzeugs das Drehmoment an der Getriebeeingangswelle bis zu einem Faktor von drei.

Ein sogenannter integrierter Drehmomentwandler (ITC: Integrated Torque Converter) stellt eine Möglichkeit dar, bei welcher eine Funktion der Überbrückungskupplung direkt in eine Turbine des Drehmomentwandlers integriert bzw. mittels eines Turbinenrads durchführbar ist. Eine solche Ausbildung besitzt ein vergleichsweise geringes Gewicht und somit eine vergleichsweise geringe Massenträgheit. Darüber hinaus ist ein Bauraumverbrauch geringer und die Überbrückungskupplung ermöglicht einen Einsatz eines zusätzlichen Dämpfungskonzepts, wie z. B. einer Drehschwingungsdämpfereinrichtung und/oder einer Fliehkraftpendeleinrichtung. - Da ein konventioneller Drehmomentwandler mit Drehschwingungsdämpfereinrichtung nur in einem Fahrzeug mit einem Hinterradantrieb anwendbar ist, eignet sich der integrierte Drehmomentwandler aufgrund einer Integration der Drehschwingungsdämpfereinrichtung an/in den Drehmomentwandler auch für einen Einsatz in einem Fahrzeug mit einem Vorderradantrieb.
Aufgrund eines Kostendrucks und angeforderter erhöhter Leistungsverhalten bei permanent kleiner werdenden Bauräumen in den Antriebssträngen der Fahrzeuge treten zunehmend Angelegenheiten in einen Fokus der Entwickler, welche bis dato nur geringfügige bzw. einfach zu behebende Probleme verursachten. Ein solcher Problembereich besteht bei einem Drehmomentwandler bzw. einem integrierten Drehmomentwandler bei einem für diesen vergleichsweise kleinen zur Verfügung stehenden Bauraum. Neben dem angeforderten geringen Platzverbrauch stehen bei der Entwicklung eines Drehmomentwandlers eine Leistungssteigerung, eine Kostensenkung und eine Leistungsdichte im Mittelpunkt, um zu einem reduziertem Kraftstoffverbrauch, geringeren Emissionen und besseren Fahrleistungen eines Kraftfahrzeugs beitragen zu können.

US 2014/0113733 A1 zeigt eine Drehmomentübertragungseinrichtung mit den Merkmalen des Oberbegriffs des Anspruchs 1.

Es ist eine Aufgabe der Erfindung, eine verbesserte Drehmomentübertragungseinrichtung, insbesondere eine verbesserte nass laufbare Anfahr-/Fahreinrichung, für ein Kraftfahrzeug, insbesondere einen Personenkraftwagen, anzugeben. Ferner ist es eine Aufgabe der Erfindung, ein verbessertes Getriebe, insbesondere ein verbessertes Automatikgetriebe oder ein verbessertes stufenloses Getriebe, für ein Kraftfahrzeug, anzugeben. - Die verbesserte Drehmomentübertragungseinrichtung soll eine Drehschwingungsverringerung auch bei einer Zylinderabschaltung eines Verbrennungsmotors des Kraftfahrzeugs bei einem geringen Bauraumverbrauch ermöglichen. Hierbei soll die Drehmomentübertragungseinrichtung einen konstruktiv einfachen und kompakten Aufbau besitzen und des Weiteren kostengünstig in ihrer Herstellung, Montage, Betrieb und/oder Wartung sein.
Die Aufgabe der Erfindung ist mittels einer Drehmomentübertragungseinrichtung, insbesondere einer nass laufbaren Anfahr-/Fahreinrichung, für ein Kraftfahrzeug mit einem Verbrennungsmotor, insbesondere für einen Antriebsstrang eines Personenkraftwagens, gemäß Anspruch 1; und mittels eines Getriebes, bevorzugt eines Automatikgetriebes oder eines stufenlosen Getriebes, für ein Fahrzeug, insbesondere für einen Antriebsstrang eines Personenkraftwagens, gemäß Anspruch 10 gelöst. Das erfindungsgemäße Getriebe weist dabei eine erfindungsgemäße Drehmomentübertragungseinrichtung, insbesondere eine erfindungsgemäße nass laufbare Anfahr-/Fahreinrichtung auf. - Vorteilhafte Weiterbildungen, zusätzliche Merkmale und/oder Vorteile der Erfindung ergeben sich aus den abhängigen Ansprüchen und/oder der folgenden Beschreibung.
Die erfindungsgemäße Drehmomentübertragungseinrichtung umfasst einen Drehmomentwandler, eine erste Fliehkraftpendeleinrichtung und eine zweiten Fliehkraftpendeleinrichtung, wobei die erste Fliehkraftpendeleinrichtung eine axial zwischen einem ersten Pendelmassenträger und einem zweiten Pendelmassenträger eingebrachte und gegenüber diesen verschwenkbar aufgehängte erste Pendelmasse, und die zweite Fliehkraftpendeleinrichtung eine gegenüber einem dritten Pendelmassenträger verschwenkbar aufgehängte zweite Pendelmasse aufweist. Hierbei kann die erste Fliehkraftpendeleinrichtung als eine Doppelflansch-Fliehkraftpendeleinrichtung und die zweite Fliehkraftpendeleinrichtung als eine Einfachflansch-Fliehkraftpendeleinrichtung ausgebildet sein.
Durch eine solche Ausgestaltung kann insbesondere eine Leistung der Drehmomentübertragungseinrichtung verbessert und/oder ein Bauraum der Drehmomentübertragungseinrichtung verringert sein. Hierbei wird eine Leistung einer herkömmlichen Drehmomentübertragungseinrichtung zum Vergleich herangezogen, welche einen ähnlichen Bauraumverbrauch wie die erfindungsgemäße besitzt, bzw. ein Bauraum einer herkömmlichen Drehmomentübertragungseinrichtung zum Vergleich herangezogen, welche ähnlich leistungsfähig wie die der Erfindung ist. Des Weiteren können Herstellungskosten gesenkt und/oder eine Drehschwingungsdämpfung angepasster und verbessert bewirkt werden, insbesondere auch bei einer Zylinderabschaltung des Verbrennungsmotors.
Die erste Fliehkraftpendeleinrichtung kann auf eine erste Abstimmordnung und die zweite Fliehkraftpendeleinrichtung kann auf eine zweite Abstimmordnung ausgerichtet sein, wobei die erste Abstimmordnung gleich oder verschieden von der zweiten Abstimmordnung sein kann. Eine der Abstimmordnungen kann dahingehend ausgelegt sein, dass diese insbesondere dann wirksam ist, wenn der Verbrennungsmotor in einer Phase mit einer Zylinderabschaltung betreibbar ist, und die zweite Abstimmordnung kann dahingehend ausgelegt sein, dass diese insbesondere dann wirksam ist, wenn der Verbrennungsmotor in einer Phase betreibbar ist, in welcher alle Zylinder des Verbrennungsmotors regulär arbeiten. Ferner ist es möglich, zusätzlich eine oder eine Mehrzahl weiterer Fliehkraftpendeleinrichtungen vorzusehen, die auf jeweils gleiche oder unterschiedliche, bevorzugt zwei oder mehr Abstimmordnungen ausgerichtet sind.

In bevorzugten Ausführungsformen der Erfindung umfasst die Drehmomentübertragungseinrichtung eine Drehschwingungsdämpfereinrichtung, wobei die erste Fliehkraftpendeleinrichtung und/oder die zweite Fliehkraftpendeleinrichtung an der Drehschwingungsdämpfereinrichtung angebracht ist. Hierbei kann ein Eingangsteil der Drehschwingungsdämpfereinrichtung an einer Turbine des Drehmomentwandlers drehfest vorgesehen sein, ein Ausgangsteil der Drehschwingungsdämpfereinrichtung als der dritte Pendelmassenträger ausgebildet sein und/oder das Ausgangsteil drehfest mit einem Pendelmassenträger der ersten Fliehkraftpendeleinrichtung verbunden sein. Bevorzugt ist das Ausgangsteil der Drehschwingungsdämpfereinrichtung drehfest mit einer Nabe verbunden, die auf einer Getriebeeingangswelle drehfest vorsehbar ist. Hierbei kann ein innerer Umfangsabschnitt des Ausgangsteils als diese Nabe ausgebildet sein.

Gemäß der Erfindung können der erste Pendelmassenträger, der zweite Pendelmassenträger und der dritte Pendelmassenträger miteinander drehfest verbunden sein, wobei bevorzugt lediglich der erste Pendelmassenträger am zweiten Pendelmassenträger und lediglich der zweite Pendelmassenträger am dritten Pendelmassenträger befestigt ist, oder der erste Pendelmassenträger, der zweite Pendelmassenträger und der dritte Pendelmassenträger sind gemeinsam aneinander festgelegt. D. h. die drei Pendelmassenträger sind entweder mechanisch in Reihe oder mechanisch parallel geschaltet. Für die erstere Befestigung werden z. B. zwei Reihen von Niete und für die zweitere Befestigung werden z. B. eine Reihe von Niete benötigt. Alternativ ist natürlich eine Schweiß- oder Lötverbindung anwendbar.

Die Drehschwingungsdämpfereinrichtung und die zweite Fliehkraftpendeleinrichtung können im Wesentlichen radial versetzt zueinander angeordnet sein, wobei jeweils im Wesentlichen zur Drehschwingungsdämpfereinrichtung mit der zweiten Fliehkraftpendeleinrichtung, bevorzugt die erste Fliehkraftpendeleinrichtung und bevorzugt der Drehmomentwandler axial versetzt dazu angeordnet sind. Hierbei ist der Drehmomentwandler bevorzugt getriebeseitig und die erste Fliehkraftpendeleinrichtung bevorzugt motorseitig von der Drehschwingungsdämpfereinrichtung bzw. der zweiten Fliehkraftpendeleinrichtung angeordnet.

Ein von der Turbine des Drehmomentwandlers stammendes Drehmoment wird dabei in das Eingangsteil der Drehschwingungsdämpfereinrichtung und von dort von einem Energiespeicher der Drehschwingungsdämpfereinrichtung schwindungsgedämpft auf das Ausgangsteil der Drehschwingungsdämpfereinrichtung übertragen. Mit dem Ausgangsteil sind die Fliehkraftpendeleinrichtungen mechanisch gekoppelt und tilgen im Wesentlichen parallel noch vorhandene Schwingungen je nach einer Abstimmordnung. Erst dann wird das dadurch modifizierte Drehmoment über die Nabe der Drehschwingungsdämpfereinrichtung in eine Getriebeeingangswelle und von dort in das Getriebe eingeleitet.

Die Drehmomentübertragungseinrichtung kann zwischen einer Antriebsseite, z. B. einem Verbrennungsmotor, und einer Abtriebsseite, z. B. einem Getriebe, wirksam sein. Hierbei kann in einem Gehäuse des Drehmomentwandlers eine Pumpe, die Turbine und eine Überbrückungskupplung zum Übertragen eines Drehmoments zwischen der Antriebsseite und der Abtriebsseite angeordnet sein, wobei die Überbrückungskupplung bevorzugt als eine in den Drehmomentwandler integrierte Überbrückungskupplung ausgebildet ist. Alternativ kann die Überbrückungskupplung ein an der Turbine angebrachtes, axial verschiebbares und/oder elastisches Betätigungselement zum Betätigen der Überbrückungskupplung aufweisen, wobei das Betätigungselement zum Betätigen dieser Überbrückungskupplung bevorzugt in Richtung Abtriebsseite der Drehmomentübertragungseinrichtung verschiebbar ist und/oder das Betätigungselement einteilig oder einstückig mit der Turbine ausgebildet oder verbunden ist.

Gemäß der Erfindung kann der zweite Pendelmassenträger auf der Nabe des Ausgangsteils der Drehschwingungsdämpfereinrichtung zentriert sein. Ferner kann der dritte Pendelmassenträger mit dem ersten Pendelmassenträger und/oder dem zweiten Pendelmassenträger einteilig, einstückig, stofflich einstückig oder integral ausgebildet sein. Darüber hinaus kann die zweite Pendelmasse als beidseitig am dritten Pendelmassenträger angeordnetes Pendelmassenpaar ausgebildet sein. Des Weiteren kann die Turbine zusammen mit dem Betätigungselement axial verschiebbar sein, und zusätzlich kann ein Anlasserzahnkranz an der Pumpe bzw. einem Gehäuse der Pumpe vorgesehen, befestigt oder ausgebildet sein.

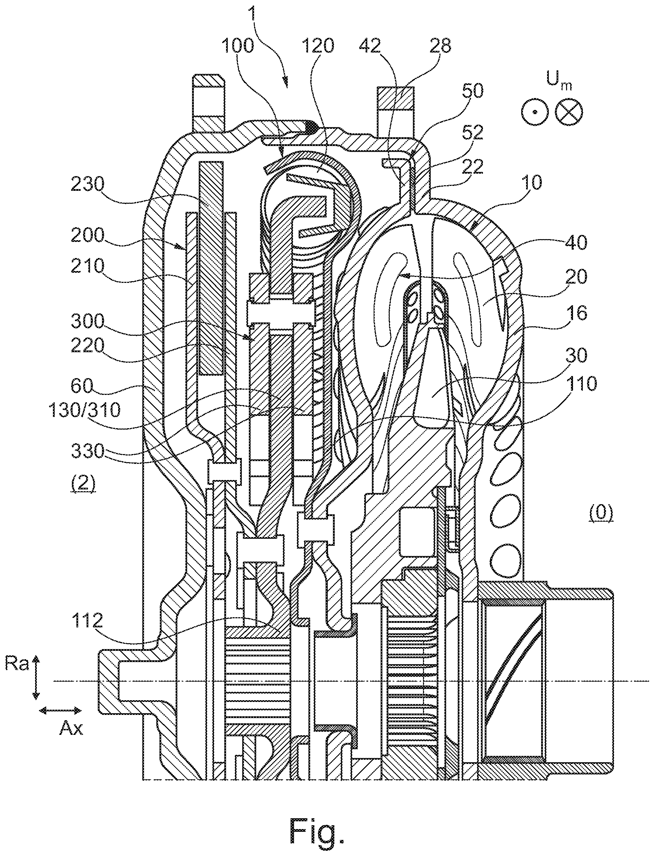

Die Erfindung ist im Folgenden anhand von Ausführungsbeispielen einer Ausführungsform einer Variante unter Bezugnahme auf die beigefügte detaillierte und nicht maßstabsgetreue Figur näher erläutert. Elemente, Bauteile oder Komponenten, welche eine identische, univoke oder analoge Ausbildung und/oder Funktion besitzen, sind in der Figurenbeschreibung, der Bezugszeichenliste und den Patentansprüchen mit denselben Bezugszeichen versehen und/oder in der Figur mit denselben Bezugszeichen gekennzeichnet. Mögliche, in der Beschreibung nicht erläuterte, in der Figur nicht dargestellte und/oder nicht abschließende Alternativen, statische und/oder kinematische Umkehrungen, Kombinationen etc. zu der dargestellten Ausführungsform und/oder den erläuterten Ausführungsbeispielen der Erfindung bzw. einzelnen Baugruppen, Teilen oder Abschnitten davon, können der Bezugszeichenliste entnommen werden.

Sämtliche erläuterten Merkmale, auch die der Bezugszeichenliste, sind nicht nur in der angegebenen Kombination bzw. den angegebenen Kombinationen, sondern auch in einer anderen Kombination bzw. anderen Kombinationen oder in Alleinstellung anwendbar. Insbesondere ist es möglich, anhand der Bezugszeichen und den diesen zugeordneten Merkmalen in der Beschreibung der Erfindung, der Figurenbeschreibung und/oder der Bezugszeichenliste, ein Merkmal oder eine Mehrzahl von Merkmalen in der Beschreibung der Erfindung und/oder der Figurenbeschreibung zu ersetzen. Die einzige Figur (Fig.) der Zeichnung zeigt in einem zweidimensionalen axialen Halbschnitt eine spezielle Ausführungsform einer als eine nass laufbare Anfahr-/Fahreinrichtung 1 ausgebildete Drehmomentübertragungseinrichtung 1 für ein Fahrzeug, insbesondere ein Kraftfahrzeug. Hierbei umfasst die Drehmomentübertragungseinrichtung 1 neben einem Drehmomentwandler 10 genau drei Schwingungsisolierungseinrichtungen 100, 200, 300, wobei eine erste Schwingungsisolierungseinrichtung 100 als eine Dämpfereinrichtung 100, eine zweite Schwingungsisolierungseinrichtung 200 als eine erste Tilgereinrichtung 200 und eine dritte Schwingungsisolierungseinrichtung 300 als eine zweite Tilgereinrichtung 300 ausgebildet ist. Die Dämpfereinrichtung 100 ist bevorzugt als eine Drehschwingungsdämpfereinrichtung 100 und die Tilgereinrichtungen 200, 300 sind bevorzugt als Fliehkraftpendeleinrichtungen 200, 300 ausgebildet.
Die Erfindung ist im Folgenden anhand von Ausführungsformen der dargestellten Ausführungsform der Drehmomentübertragungseinrichtung 1, insbesondere für einen Antriebsstrang des Kraftfahrzeugs, näher erläutert. Die Erfindung ist jedoch nicht auf eine solche Variante und/oder die nachfolgend erläuterten Ausführungsformen beschränkt, sondern ist von grundlegenderer Natur, sodass sie auf sämtliche Drehmomentübertragungseinrichtungen im Sinne der Erfindung angewendet werden kann. - Obwohl die Erfindung im Detail durch bevorzugte Ausführungsbeispiele näher illustriert und beschrieben ist, so ist die Erfindung durch diese offenbarten Beispiele nicht eingeschränkt. Andere Variationen können hieraus abgeleitet werden, ohne den Schutzumfang der Erfindung zu verlassen.
Die Erläuterung der Erfindung bezieht sich auf eine Axialrichtung Ax, eine Rotationsachse Ax, eine Radialrichtung Ra und eine Umfangsrichtung Um der erfindungsgemäßen Drehmomentübertragungseinrichtung 1 des Antriebsstrangs des Kraftfahrzeugs, wie z. B. eines Personenkraftwagens, eines Personentransportwagens, eines Kraftrads, eines Nutzfahrzeugs, eines (Schwerst-)Lastkraftwagens, eines Baufahrzeugs, einer Baumaschine, eines Sonderfahrzeugs etc. mit Benzin- oder Dieselmotor. Diese Lageangaben beziehen sich z. B. auch auf eine Kurbelwelle 2 des Fahrzeugs, den Antriebsstrang, den Drehmomentwandler 10, die Schwingungsisolierungseinrichtungen 100, 200, 300, ein Getriebe 0 bzw. dessen Getriebeeingangswelle(n) etc.

Der hydrodynamische Drehmomentwandler 10 ist dabei bevorzugt als ein integrierter Drehmomentwandler 10 (ITC: Integrated Torque Converter) ausgebildet, d. h. eine Überbrückungskupplung 50 des Drehmomentwandlers 10 ist in den Drehmomentwandler 10 integriert und nicht davon entfernt vorgesehen, wobei ein solcher Drehmomentwandler 10 natürlich ebenfalls anwendbar ist. Ferner kann die Drehschwingungsdämpfereinrichtung 100 ein- oder mehrstufig und/oder ein- oder mehrreihig ausgebildet sein. Vorliegend ist die Drehschwingungsdämpfereinrichtung 100 einstufig und einreihig mit Bogenfedern 120 ausgebildet. Darüber hinaus ist eine der Tilgereinrichtungen 200, 300 bevorzugt als eine Einfachflansch-Fliehkraftpendeleinrichtung 300 und die andere Tilgereinrichtung bevorzugt als eine Doppelflansch-Fliehkraftpendeleinrichtung 300 ausgebildet.

Die Drehmomentübertragungseinrichtung 1 ist wirksam zwischen einer Antriebsseite 2, beispielsweise einem Verbrennungsmotor 2 bzw. dessen Kurbelwelle 2, und einer Abtriebsseite 0, beispielsweise einem Getriebe 0 vorsehbar bzw. vorgesehen, wobei deren Drehmomentwandler 10 ein Gehäuse 16 aufweist, in welchem eine Pumpe 20 bzw. ein Pumpenrad 20, ein optionales Leitrad 30, eine Turbine 40 bzw. ein Turbinenrad 40 und die Überbrückungskupplung 50 zum Übertragen eines Drehmoments zwischen der Antriebsseite 2 und der Abtriebsseite 0 angeordnet sind. Die Überbrückungskupplung 50 ist von einem Umfangsrand der Pumpe 20, einem Umfangsrand der Turbine 40 und einem dazwischen befindlichen Reibbelag 52 konstituiert. Außen an der Pumpe 20 kann die Drehmomentübertragungseinrichtung 1 einen Anlasserzahnkranz 28 besitzen.

Eine Überbrückungskupplung des Drehmomentwandlers 10 kann auch ein mit der Turbine 40 einteilig ausgebildetes Betätigungselement zum Betätigen der Überbrückungskupplung aufweisen. In einem solchen Fall ist der Drehmomentwandler 10 nicht als integrierter Drehmomentwandler 10 ausgebildet (nicht dargestellt). Das Betätigungselement ist z. B. gemeinsam mit der Turbine axial verschiebbar, wobei zum Betätigen, d. h. zum Schließen, der Überbrückungskupplung die Turbine axial in Richtung Abtriebsseite 0 verschoben wird. Hierbei kann die Überbrückungskupplung ein an der Turbine 40 angebrachtes, axial verschiebbares und/oder axial elastisches Betätigungselement zum Betätigen der Überbrückungskupplung aufweisen.

Die erste Fliehkraftpendeleinrichtung 200 umfasst eine axial zwischen einem ersten Pendelmassenträger 210 und einem zweiten Pendelmassenträger 220 eingebrachte und gegenüber diesen verschwenkbar aufgehängte erste Pendelmasse 230. Der erste 210 und zweite Pendelmassenträger 220 sind miteinander fest verbunden, bevorzugt vernietet, insbesondere radial innerhalb der ersten Pendelmasse 230. Die zweite Fliehkraftpendeleinrichtung 300 weist eine gegenüber einem dritten Pendelmassenträger 310 verschwenkbar aufgehängte zweite Pendelmasse 330 auf. Der dritte Pendelmassenträger 310 ist am zweiten Pendelmassenträger 220 fest angebracht, bevorzugt an diesen genietet. Hierbei sind die Pendelmassenträger 210, 220, 310 bevorzugt jeweils als ein Pendelflansch 210, 220, 310 ausgebildet.

Eine bevorzugte Ausgestaltung der Erfindung zeichnet sich dadurch aus, dass der dritte Pendelmassenträger 310 mit dem ersten 210 und/oder zweiten Pendelmassenträger 220 einteilig oder einstückig ausgebildet ist. Ferner zeichnet sich eine bevorzugte Ausführungsform der Erfindung dadurch aus, dass die dritte Pendelmasse 330 als ein beidseitig am dritten Pendelmassenträger 310 aufgehängtes Pendelmassenpaar 330 ausgebildet ist. Gemäß der Erfindung kann erste Fliehkraftpendeleinrichtung 200 auf eine erste Abstimmordnung und die zweite Fliehkraftpendeleinrichtung 300 auf eine zweite Abstimmordnung hin eingerichtet sein, wobei bevorzugt beide Abstimmordnungen verschieden voneinander sind. Dies ermöglicht eine gute Drehschwingungsdämpfung bei einer Zylinderabschaltung des Verbrennungsmotors.

Ferner ist bevorzugt innerhalb des Gehäuses 16 des Drehmomentwandlers 10 die Drehschwingungsdämpfereinrichtung 100 angeordnet, welche ein Eingangsteil 110 und ein gegenüber diesem über eine Wirkung eines Energiespeicherelements 120 (vorliegend Bogenfedern 120) begrenzt verdrehbares Ausgangsteil 130 aufweist. Die erste 200 und die zweite Fliehkraftpendeleinrichtung 200 sind dabei bevorzugt an der Drehschwingungsdämpfereinrichtung 100 angebracht, vorliegend vorzugsweise am Ausgangsteil 130. Hierbei kann die erste 200 und/oder die zweite Fliehkraftpendeleinrichtung 300 der Drehschwingungsdämpfereinrichtung 100 wirksam vorgeschaltet und/oder nachgeschaltet sein. Dabei kann eine Fliehkraftpendeleinrichtung 200/300 vorgeschaltet und die zweite Fliehkraftpendeleinrichtung 300/200 der Drehschwingungsdämpfereinrichtung 100 nachgeschaltet sein. Die Drehschwingungsdämpfereinrichtung 100 kann mehrere Dämpferstufen mit jeweils eigenen Energiespeicherelementen 120 aufweisen, welche in Reihe und/oder parallel geschaltet sein können.

Gemäß der Erfindung können auch zwei Doppelflansch-Fliehkraftpendeleinrichtungen 200, 200 mittels der drei Pendelmassenträger 210, 220, 310 realisiert sein (nicht dargestellt). Hierbei wechseln sich die Pendelmassenträger 210, 220, 310 mit den Pendelmassen 230, 330 ab. D. h. es ergibt sich in Axialrichtung Ax von links folgende Anordnung. Auf den Pendelmassenträger 210 folgt die Pendelmasse 230, auf welche der Pendelmassenträger 220 folgt, auf welchen die Pendelmasse 330 und schließlich der Pendelmassenträger 310 folgt. Hierbei lagern die Pendelmassenträger 210, 220 die Pendelmasse 210 und die Pendelmassenträger 220, 310 die Pendelmasse 330; d. h. der mittige Pendelmassenträger 220 ist für beide Doppelflansch-Fliehkraftpendeleinrichtungen 200, 200 funktional.

### Bezugszeichenliste

- 0: (Automatik-)Getriebe, stufenloses Getriebe (CVT-Getriebe, CVT: Continuously Variable Transmission) für ein Fahrzeug, insbesondere für einen Antriebsstrang eines Kraftfahrzeugs, Getriebeseite, Abtriebsseite
- 1: Drehmomentübertragungseinrichtung, Drehmomentwandlereinrichtung, nass laufbare Anfahr-/Fahreinrichtung, Wandler
- 2: Verbrennungsmotor, Kurbelwelle, Motorseite, Antriebsseite
- 10: (integrierter) (hydrodynamischer) Drehmomentwandler (ITC: Integrated Torque Converter)
- 16: Gehäuse des Drehmomentwandlers 10
- 20: (Wandler-)Pumpe, Pumpenrad, Krafteinleitungsbauteil des Drehmomentwandlers 10 bzw. der Kupplungseinrichtung 50, unmittelbare Eingangsseite des Drehmomentwandlers 10
- 22: Kupplungsabschnitt, (Außen-)Umfangsrand der Pumpe 20 für Kupplungseinrichtung 50
- 28: Anlasserzahnkranz (optional)
- 30: Leitrad (optional)
- 40: (Wandler-)Turbine, Turbinenrad, Kraftausleitungsbauteil des Drehmomentwandlers 10 bzw. der Kupplungseinrichtung 50, unmittelbare Ausgangsseite des Drehmomentwandlers 10, auf der Getriebeeingangswelle drehbar gelagert
- 42: Kupplungsabschnitt, (Außen-)Umfangsrand der Turbine 40
- 50: Kupplungseinrichtung, Überbrückungskupplung (in den Drehmomentwandler 10 integriert (in der Fig. dargestellt) oder nicht), Reibkupplung
- 52: Reibbelag der Kupplungseinrichtung 30
- 60: Deckel
- 100: (erste) Dämpfereinrichtung, (erste) Schwingungsisolierungseinrichtung, Dreh-/ Torsionsschwingungsdämpfereinrichtung, ein- oder mehrstufig und/oder ein- oder mehrreihig
- 110: Eingangsteil, Seitenscheibe ggf. incl. Gegenscheibe, Eingangsflansch der Dämpfereinrichtung 100
- 112: Nabe, Dämpfernabe, drehfest mit der Getriebeeingangswelle verbunden
- 120: Energiespeicher, Bogenfeder(n), Linearfeder(n), Tellerfeder(n) etc. der Dämpfereinrichtung 100
- 130: Ausgangsteil, Ausgangsflansch, Naben-/Lagerhülsenflansch der Dämpfereinrichtung 100 (entspricht Pos. 310)
- 200: (erste) Tilgereinrichtung, (zweite) Schwingungsisolierungseinrichtung, (Trapez-) Fliehkraftpendeleinrichtung, Doppelflansch-/Einfachflansch-Fliehkraftpendeleinrichtung
- 210: (erster) Pendelmassenträger, Pendelmassenflansch
- 220: (zweiter) Pendelmassenträger, Pendelmassenflansch
- 230: (erste) Tilgermasse, Pendelmasse
- 300: (zweite) Tilgereinrichtung, (dritte) Schwingungsisolierungseinrichtung, (Trapez-) Fliehkraftpendeleinrichtung, Einfachflansch-/Doppelflansch-Fliehkraftpendeleinrichtung
- 310: (dritter) Pendelmassenträger, Pendelmassenflansch (entspricht Pos. 130)
- 330: (zweite) Tilgermasse, Pendelmasse (in der Prioritätsanmeldung ist diese Pendelmasse 330 als dritte Pendelmasse bezeichnet)
- Ax: Axialrichtung, Längsrichtung, Rotationsachse der Kurbelwelle 2, des Antriebsstrangs, der Drehmomentübertragungseinrichtung 1, des Drehmomentwandlers 10, der Schwingungsisolierungseinrichtungen 100, 200, 300, des Getriebes 0, der Getriebeeingangswelle(n) etc., axial
- Ra: Radialrichtung der Kurbelwelle 2, des Antriebsstrangs, der Drehmomentübertragungseinrichtung 1, des Drehmomentwandlers 10, der Schwingungsisolierungseinrichtungen 100, 200, 300, des Getriebes 0, der Getriebeeingangswelle(n) etc., radial
- Um: Umfangsrichtung, Umfang der Kurbelwelle 2, des Antriebsstrangs, der Drehmomentübertragungseinrichtung 1, des Drehmomentwandlers 10, der Schwingungsisolierungseinrichtungen 100, 200, 300, des Getriebes 0, der Getriebeeingangswelle(n) etc., (Relativ-)Drehbewegungen bzw. Rotationsbewegungen finden im Umfangsrichtung Um statt, tangential

## Patentansprüche

1. Drehmomentübertragungseinrichtung, insbesondere nass laufbare Anfahr-/Fahreinrichung (1), für ein Kraftfahrzeug mit einem Verbrennungsmotor, insbesondere für einen Antriebsstrang eines Personenkraftwagens, mit einem Drehmomentwandler (10), einer ersten Fliehkraftpendeleinrichtung (200) und einer zweiten Fliehkraftpendeleinrichtung (300), **dadurch gekennzeichnet, dass** die erste Fliehkraftpendeleinrichtung (200) eine axial zwischen einem ersten Pendelmassenträger (210) und einem zweiten Pendelmassenträger (220) eingebrachte und gegenüber diesen verschwenkbare erste Pendelmasse (210), und die zweite Fliehkraftpendeleinrichtung (300) eine gegenüber einem dritten Pendelmassenträger (310) verschwenkbar angeordnete zweite Pendelmasse (330) umfasst, wobei eine Überbrückungskupplung (50) ein an der Turbine (40) angebrachtes, axial verschiebbares und/oder elastisches Betätigungselement (42) zum Betätigen der Überbrückungskupplung (50) aufweist, wobei das Betätigungselement zum Betätigen der Überbrückungskupplung (50) bevorzugt in Richtung Abtriebsseite (0) der Drehmomentübertragungseinrichtung (1) verschiebbar ist.

2. Drehmomentübertragungseinrichtung gemäß vorhergehendem Anspruch, **dadurch gekennzeichnet, dass** die erste Fliehkraftpendeleinrichtung (200) als eine Doppelflansch-Fliehkraftpendeleinrichtung (200) und die zweite Fliehkraftpendeleinrichtung (300) als eine Einfachflansch-Fliehkraftpendeleinrichtung (300) ausgebildet ist.

3. Drehmomentübertragungseinrichtung gemäß einem der vorhergehenden Ansprüche, **dadurch gekennzeichnet, dass** die erste Fliehkraftpendeleinrichtung (200) auf eine erste Abstimmordnung und die zweite Fliehkraftpendeleinrichtung (300) auf eine zweite Abstimmordnung ausgerichtet ist, und die erste Abstimmordnung bevorzugt gleich oder bevorzugt verschieden von der zweiten Abstimmordnung ist, und
eine der Abstimmordnungen dahingehend ausgelegt ist, dass diese insbesondere dann wirksam ist, wenn der Verbrennungsmotor in einer Phase mit einer Zylinderabschaltung betreibbar ist, und die zweite Abstimmordnung dahingehend ausgelegt ist, dass diese insbesondere dann wirksam ist, wenn der Verbrennungsmotor in einer Phase betreibbar ist, in welcher alle Zylinder des Verbrennungsmotors regulär arbeiten.

4. Drehmomentübertragungseinrichtung gemäß einem der vorhergehenden Ansprüche, **dadurch gekennzeichnet, dass** die Drehmomentübertragungseinrichtung (1) eine Drehschwingungsdämpfereinrichtung (100) umfasst und die erste Fliehkraftpendeleinrichtung (200) und/oder die zweite Fliehkraftpendeleinrichtung (300) an der Drehschwingungsdämpfereinrichtung (100) angebracht ist, wobei
bevorzugt, ein Eingangsteil (110) der Drehschwingungsdämpfereinrichtung (100) an einer Turbine (40) des Drehmomentwandlers (10) drehfest vorgesehen ist, ein Ausgangsteil (130/310) der Drehschwingungsdämpfereinrichtung (100) als der dritte Pendelmassenträger (310/130) ausgebildet ist und/oder das Ausgangsteil (130/310) drehfest mit einem Pendelmassenträger (210, 220) der ersten Fliehkraftpendeleinrichtung (200) verbunden ist.

5. Drehmomentübertragungseinrichtung gemäß einem der vorhergehenden Ansprüche, **dadurch gekennzeichnet, dass** der erste Pendelmassenträger (210), der zweite Pendelmassenträger (220) und der dritte Pendelmassenträger (310) miteinander drehfest verbunden sind, wobei
bevorzugt lediglich der erste Pendelmassenträger (210) am zweiten Pendelmassenträger (220) und lediglich der zweite Pendelmassenträger (220) am dritten Pendelmassenträger (310) befestigt ist, oder der erste Pendelmassenträger (210), der zweite Pendelmassenträger (220) und der dritte Pendelmassenträger (310) gemeinsam aneinander festgelegt sind.

6. Drehmomentübertragungseinrichtung gemäß einem der vorhergehenden Ansprüche, **dadurch gekennzeichnet, dass** die Drehschwingungsdämpfereinrichtung (100) und die zweite Fliehkraftpendeleinrichtung (300) im Wesentlichen radial versetzt zueinander angeordnet sind, wobei
jeweils im Wesentlichen zur Drehschwingungsdämpfereinrichtung (100) mit der zweiten Fliehkraftpendeleinrichtung (300), bevorzugt die erste Fliehkraftpendeleinrichtung (200) und bevorzugt der Drehmomentwandler (10) axial versetzt angeordnet sind.

7. Drehmomentübertragungseinrichtung gemäß einem der vorhergehenden Ansprüche, **dadurch gekennzeichnet, dass** die Drehmomentübertragungseinrichtung (1) zwischen einer Antriebsseite (2), beispielsweise einem Verbrennungsmotor (2) des Kraftfahrzeugs, und einer Abtriebsseite (0), beispielsweise einem Getriebe (0) des Kraftfahrzeugs, wirksam ist, und/oder in einem Gehäuse (16) des Drehmomentwandlers (10) eine Pumpe (20), die Turbine (30) und eine Überbrückungskupplung (50) zum Übertragen eines Drehmoments zwischen der Antriebsseite (2) und der Abtriebsseite (0) angeordnet sind, wobei die Überbrückungskupplung (50) bevorzugt als eine in den Drehmomentwandler (10) integrierte Überbrückungskupplung (50) ausgebildet ist.

8. Drehmomentübertragungseinrichtung gemäß einem der vorhergehenden Ansprüche, **dadurch gekennzeichnet**, das Betätigungselement insbesondere einteilig oder einstückig mit der Turbine (40) ausgebildet oder verbunden ist.

9. Drehmomentübertragungseinrichtung gemäß einem der vorhergehenden Ansprüche, **dadurch gekennzeichnet, dass**:
- der zweite Pendelmassenträger (220) auf einer Nabe (112) des Ausgangsteils (130/310) der Drehschwingungsdämpfereinrichtung (100) zentriert ist;
- die Nabe (112) integral mit dem Ausgangsteil (130/310) der Drehschwingungsdämpfereinrichtung (100) ausgebildet ist;
- der dritte Pendelmassenträger (310) mit dem ersten Pendelmassenträger (210) und/oder dem zweiten Pendelmassenträger (220) einteilig, einstückig, stofflich einstückig oder integral ausgebildet ist;
- die zweite Pendelmasse (330) als beidseitig am dritten Pendelmassenträger (310/130) angeordnetes Pendelmassenpaar ausgebildet ist;
- die Turbine (40) zusammen mit dem Betätigungselement axial verschiebbar ist; und/oder
- ein Anlasserzahnkranz (28) an der Pumpe (20) vorgesehen, befestigt oder ausgebildet ist.

10. Getriebe, bevorzugt Automatikgetriebe (0) oder stufenloses Getriebe (0), für ein Fahrzeug, insbesondere für einen Antriebsstrang eines Personenkraftwagens, **dadurch gekennzeichnet, dass**
das Getriebe (0) eine Drehmomentübertragungseinrichtung (1), insbesondere eine nass laufbare Anfahr-/Fahreinrichtung (1), gemäß einem der vorhergehenden Ansprüche aufweist.

## Claims

1. Torque-transmitting device, in particular launch/traction device (1) with wet-running capability, for a motor vehicle having an internal combustion engine, in particular for a drivetrain of a passenger motor vehicle, having a torque converter (10), a first centrifugal pendulum device (200) and a second centrifugal pendulum device (300), **characterized in that** the first centrifugal pendulum device (200) comprises a first pendulum mass (210) which is incorporated axially between a first pendulum mass carrier (210) and a second pendulum mass carrier (220) and which is pivotable relative to said pendulum mass carriers, and the second centrifugal pendulum device (300) comprises a second pendulum mass (330) which is arranged so as to be pivotable relative to a third pendulum mass carrier (310), wherein a lockup clutch (50) has an axially displaceable and/or elastic actuating element (42) which is attached to the turbine (40) and which serves for actuating the lockup clutch (50), wherein the actuating element is, for the purposes of actuating the lockup clutch (50), displaceable preferably in the direction of an output side (0) of the torque-transmitting device (1) .

2. Torque-transmitting device according to the preceding claim, **characterized in that** the first centrifugal pendulum device (200) is formed as a double-flange centrifugal pendulum device (200), and the second centrifugal pendulum device (300) is formed as a single-flange centrifugal pendulum device (300).

3. Torque-transmitting device according to either of the preceding claims, **characterized in that** the first centrifugal pendulum device (200) is directed to a first order of tuning and the second centrifugal pendulum device (300) is directed to a second order of tuning, and the first order of tuning is preferably equal to or preferably different from the second order of tuning, and one of the orders of tuning is configured so as to be effective in particular when the internal combustion engine is operable in a phase with cylinder deactivation, and the second order of tuning is configured so as to be effective in particular when the internal combustion engine is operable in a phase in which all of the cylinders of the internal combustion engine operate normally.

4. Torque-transmitting device according to any of the preceding claims, **characterized in that** the torque-transmitting device (1) comprises a rotary vibration damper device (100) and the first centrifugal pendulum device (200) and/or the second centrifugal pendulum device (300) is attached to the rotary vibration damper device (100), wherein preferably, an input part (110) of the rotary vibration damper device (100) is provided rotationally conjointly on a turbine (40) of the torque converter (10), an output part (130/310) of the rotary vibration damper device (100) is formed as the third pendulum mass carrier (310/130), and/or the output part (130/310) is connected rotationally conjointly to a pendulum mass carrier (210, 220) of the first centrifugal pendulum device (200).

5. Torque-transmitting device according to any of the preceding claims, **characterized in that** the first pendulum mass carrier (210), the second pendulum mass carrier (220) and the third pendulum mass carrier (310) are connected rotationally conjointly to one another, wherein
preferably only the first pendulum mass carrier (210) is fastened to the second pendulum mass carrier (220) and only the second pendulum mass carrier (220) is fastened to the third pendulum mass carrier (310), or the first pendulum mass carrier (210), the second pendulum mass carrier (220) and the third pendulum mass carrier (310) are jointly fixed to one another.

6. Torque-transmitting device according to any of the preceding claims, **characterized in that** the rotary vibration damper device (100) and the second centrifugal pendulum device (300) are arranged so as to be substantially radially offset with respect to one another, wherein
preferably the first centrifugal pendulum device (200) and preferably the torque converter (10) are in each case arranged so as to be substantially axially offset with respect to the rotary vibration damper device (100) with the second centrifugal pendulum device (300).

7. Torque-transmitting device according to any of the preceding claims, **characterized in that** the torque-transmitting device (1) acts between a drive side (2), for example an internal combustion engine (2) of the motor vehicle, and an output side (0), for example a transmission (0) of the motor vehicle, and/or
a pump (20), the turbine (30) and a lockup clutch (50) for the purposes of transmitting a torque between the drive side (2) and the output side (0) are arranged in a housing (16) of the torque converter (10), wherein the lockup clutch (50) is preferably formed as a lockup clutch (50) integrated into the torque converter (10).

8. Torque-transmitting device according to any of the preceding claims, **characterized in that** the actuating element is in particular formed in unipartite fashion or integrally with, or connected in unipartite fashion or integrally to, the turbine (40) .

9. Torque-transmitting device according to any of the preceding claims, **characterized in that**:
- the second pendulum mass carrier (220) is centred on a hub (112) of the output part (130/310) of the rotary vibration damper device (100);
- the hub (112) is formed integrally with the output part (130/310) of the rotary vibration damper device (100) ;
- the third pendulum mass carrier (310) is formed in unipartite fashion, in one piece, materially in one piece, or integrally, with the first pendulum mass carrier (210) and/or the second pendulum mass carrier (220);
- the second pendulum mass (330) is formed as a pendulum mass pair arranged to both sides on the third pendulum mass carrier (310/130);
- the turbine (40) is axially displaceable together with the actuating element; and/or
- a starter pinion (28) is provided on, fastened to or formed on the pump (20).

10. Transmission, preferably automatic transmission (0) or continuously variable transmission (0), for a vehicle, in particular for a drivetrain of a passenger motor vehicle, **characterized in that** the transmission (0) has a torque-transmitting device (1), in,particular a launch/traction device (1) with wet-running capability, according to any of the preceding claims.

## Revendications

1. Dispositif de transfert de couple, en particulier dispositif de démarrage/conduite (1) pouvant fonctionner par voie humide, pour un véhicule automobile comprenant un moteur à combustion interne, en particulier pour une chaîne cinématique d'un véhicule de tourisme, comprenant un convertisseur de couple (10), un premier dispositif de pendule à force centrifuge (200) et un deuxième dispositif de pendule à force centrifuge (300), **caractérisé en ce que** le premier dispositif de pendule à force centrifuge (200) comprend une première masse pendulaire (210) installée axialement entre un premier support de masse pendulaire (210) et un deuxième support de masse pendulaire (220) et pouvant pivoter par rapport à ceux-ci, et le deuxième dispositif de pendule à force centrifuge (300) comprend une deuxième masse pendulaire (330) disposée de manière à pouvoir pivoter par rapport à un troisième support de masse pendulaire (310), un embrayage de pontage (50) présentant un élément d'actionnement (42) déplaçable axialement et/ou élastique, monté sur la turbine (40), pour actionner l'embrayage de pontage (50), l'élément d'actionnement pour actionner l'embrayage de pontage (50) pouvant de préférence être déplacé dans la direction du côté de prise de force (0) du dispositif de transfert de couple (1).

2. Dispositif de transfert de couple selon la revendication précédente, **caractérisé en ce que** le premier dispositif de pendule à force centrifuge (200) est réalisé sous forme de dispositif de pendule à force centrifuge à double bride (200), et le deuxième dispositif de pendule à force centrifuge (300) est réalisé sous forme de dispositif de pendule à force centrifuge à simple bride (300).

3. Dispositif de transfert de couple selon l'une quelconque des revendications précédentes, **caractérisé en ce que** le premier dispositif de pendule à force centrifuge (200) est prévu pour un premier ordre de réglage et le deuxième dispositif de pendule à force centrifuge (300) est prévu pour un deuxième ordre de réglage, et le premier ordre de réglage est de préférence égal au deuxième ordre de réglage, ou est de préférence différent de celui-ci, et l'un des ordres de réglage est conçu de telle sorte qu'il soit actif notamment lorsque le moteur à combustion interne peut être entraîné dans une phase avec coupure de cylindres et le deuxième ordre de réglage est conçu de telle sorte qu'il soit actif notamment lorsque le moteur à combustion interne peut être entraîné dans une phase dans laquelle tous les cylindres du moteur à combustion interne fonctionnent de manière normale.

4. Dispositif de transfert de couple selon l'une quelconque des revendications précédentes, **caractérisé en ce que** le dispositif de transfert de couple (1) comprend un dispositif d'amortissement des oscillations de torsion (100) et le premier dispositif de pendule à force centrifuge (200) et/ou le deuxième dispositif de pendule à force centrifuge (300) sont montés sur le dispositif d'amortissement des oscillations de torsion (100),
une partie d'entrée (110) du dispositif d'amortissement des oscillations de torsion (100) étant de préférence prévue de manière solidaire en rotation sur une turbine (40) du convertisseur de couple (10), une partie de sortie (130/310) du dispositif d'amortissement des oscillations de torsion (100) étant réalisée sous forme de troisième support de masse pendulaire (310/130), et/ou la partie de sortie (130/310) étant connectée de manière solidaire en rotation à un support de masse pendulaire (210, 220) du premier dispositif de pendule à force centrifuge (200).

5. Dispositif de transfert de couple selon l'une quelconque des revendications précédentes, **caractérisé en ce que** le premier support de masse pendulaire (210), le deuxième support de masse pendulaire (220) et le troisième support de masse pendulaire (310) sont connectés de manière solidaire en rotation les uns avec les autres,
de préférence seulement le premier support de masse pendulaire (210) étant fixé au deuxième support de masse pendulaire (220) et seulement le deuxième support de masse pendulaire (220) étant fixé au troisième support de masse pendulaire (310), ou le premier support de masse pendulaire (210), le deuxième support de masse pendulaire (220) et le troisième support de masse pendulaire (310) étant fixés en commun les uns aux autres.

6. Dispositif de transfert de couple selon l'une quelconque des revendications précédentes, **caractérisé en ce que** le dispositif d'amortissement des oscillations de torsion (100) et le deuxième dispositif de pendule à force centrifuge (300) sont disposés essentiellement de manière décalée radialement l'un par rapport à l'autre,
de préférence le premier dispositif de pendule à force centrifuge (200) et de préférence le convertisseur de couple (10) étant disposés de manière décalée axialement à chaque fois essentiellement par rapport au dispositif d'amortissement des oscillations de torsion (100) avec le deuxième dispositif de pendule à force centrifuge (300).

7. Dispositif de transfert de couple selon l'une quelconque des revendications précédentes, **caractérisé en ce que** le dispositif de transfert de couple (1) est actif entre un côté d'entraînement (2), par exemple un moteur à combustion interne (2) du véhicule automobile, et un côté de prise de force (0), par exemple une transmission (0) du véhicule automobile, et/ou une pompe (20), la turbine (30) et un embrayage de pontage (50) pour transférer un couple entre le côté d'entraînement (2) et le côté de prise de force (0) sont disposés dans un boîtier (16) du convertisseur de couple (10), l'embrayage de pontage (50) étant de préférence réalisé sous forme d'embrayage de pontage (50) intégré dans le convertisseur de couple (10).

8. Dispositif de transfert de couple selon l'une quelconque des revendications précédentes, **caractérisé en ce que** l'élément d'actionnement est réalisé ou connecté notamment d'une seule pièce ou monobloc avec la turbine (40).

9. Dispositif de transfert de couple selon l'une quelconque des revendications précédentes, **caractérisé en ce que** :
- le deuxième support de masse pendulaire (220) est centré sur un moyeu (112) de la partie de sortie (130/310) du dispositif d'amortissement des oscillations de torsion (100) ;
- le moyeu (112) est réalisé intégralement avec la partie de sortie (130/310) du dispositif d'amortissement des oscillations de torsion (100) ;
- le troisième support de masse pendulaire (310) est réalisé d'une seule pièce, monobloc, venu de matière ou intégralement avec le premier support de masse pendulaire (210) et/ou le deuxième support de masse pendulaire (220) ;
- la deuxième masse pendulaire (330) est réalisée sous forme de paire de masses pendulaires disposée des deux côtés sur le troisième support de masse pendulaire (310/130) ;
- la turbine (40) est déplaçable axialement conjointement avec l'élément d'actionnement ; et/ou
- une couronne dentée de démarreur (28) est prévue, fixée ou réalisée sur la pompe (20).

10. Transmission, de préférence transmission automatique (0) ou transmission à variation continue (0) pour un véhicule, en particulier pour une chaîne cinématique d'un véhicule de tourisme, **caractérisée en ce que** la transmission (0) présente un dispositif de transfert de couple (1), en particulier un dispositif de démarrage/conduite (1) pouvant fonctionner par voie humide, selon l'une quelconque des revendications précédentes.
